# EUROPEAN PATENT SPECIFICATION

(11) **EP 4 585 403 B1**
(45) Date of publication and mention of the grant of the patent: **19.11.2025**
(21) Application number: 24215036.5
(22) Date of filing: 25.11.2024
(51) Int. Cl.: B29C 73/16, B60C 19/12, B29L 30/00

(54) **SEALANT COMPOSITION AND PNEUMATIC TIRE**
DICHTUNGSZUSAMMENSETZUNG UND LUFTREIFEN
COMPOSITION D'ÉTANCHÉITÉ ET PNEUMATIQUE

(30) Priority: 11.01.2024 JP 2024002228
(43) Date of publication of application: 16.07.2025
(73) Proprietor: Toyo Tire Corporation, Itami-shi, Hyogo 664-0847 (JP)
(72) Inventor: KIMURA, Takuya, Itami-shi, Hyogo, 664-0847 (JP)
(74) Representative: Ricker, Mathias

(56) References cited:
- US-A1- 2015 075 691
- US-A1- 2023 191 729

## Description

### BACKGROUND OF THE INVENTION

### 1. Field of the Invention

The present invention relates to a sealant composition and also to a pneumatic tire using the same.

### 2. Description of Related Art

As a pneumatic tire with an anti-puncture function, a tire having a sealant layer placed on its inner surface is known. In a tire provided with a sealant layer, when a foreign object such as a nail pierces the tread, and a through hole is formed, the sealant layer automatically closes the through hole to prevent air from leaking from the tire. A sealant layer can be formed, for example, by ejecting a sealant composition from the nozzle of an applicator and applying the same to the tire inner surface.

As such a sealant composition, for example, JP2011-529972A describes one containing an unsaturated diene elastomer, 30 phr to 90 phr of a hydrocarbon resin, 0 phr to 60 phr of a liquid plasticizer whose Tg is lower than -20°C, and 0 to less than 30 phr of a filler. However, the sealant composition described in JP2011-529972A is highly viscous at the temperature of application and puts a load on the applicator. Thus, there is a need to suppress the application speed.

For improving the application speed, JP2023-089834A discloses that the content of hydrocarbon resin is increased. Specifically, 95 to 150 parts by mass of a hydrocarbon resin, 20 to 60 parts by mass of a liquid plasticizer, and a specific filler are incorporated per 100 parts by mass of a solid rubber component.

US 2023/191729 A1 describes a sealant composition comprising solid rubber component, a hydrocarbon resin and a liquid plasticizer.

### SUMMARY OF THE INVENTION

Tires having a sealant layer formed thereon by an applicator are generally stored in a stationary state at normal temperature. At this time, when the sealant layer is too soft, in the stationary state, the sealant layer may flow and deform. Therefore, the sealant layer is required to have shape retention. Meanwhile, in the case where a foreign object such as a nail pierces the tread, it may happen that the foreign object is not immediately pulled out and left in the piercing state. In that case, cracks may be formed in the sealant layer over time, resulting in air leakage. Therefore, there is a demand for improving the sealing properties against such air leakage over time.

In light of the above points, an object of an embodiment of the invention is to provide a sealant composition capable of forming a sealant layer that is excellent in shape retention and sealing properties.

The invention includes the following embodiments.
[1] A sealant composition including, per 100 parts by mass of a solid rubber component containing 60 parts by mass or more of natural rubber: 95 to 150 parts by mass of a hydrocarbon resin containing 30 parts by mass or more of a terpene-based resin; and 20 to 100 parts by mass of a liquid plasticizer.
[2] The sealant composition according to [1], in which the solid rubber component is natural rubber alone or a blend of at least one member selected from the group consisting of polybutadiene, synthetic polyisoprene, butadiene copolymer, and isoprene copolymer with natural rubber.
[3] The sealant composition according to [1] or [2], in which the terpene-based resin contains a polyterpene resin.
[4] The sealant composition according to any one of [1] to [3], in which the liquid plasticizer contains an aroma oil.
[5] A pneumatic tire including a sealant layer formed from the sealant composition according to any one of [1] to [4].

According to an embodiment of the invention, a sealant layer that is excellent in shape retention and sealing properties can be formed.

### BRIEF DESCRIPTION OF THE DRAWINGS

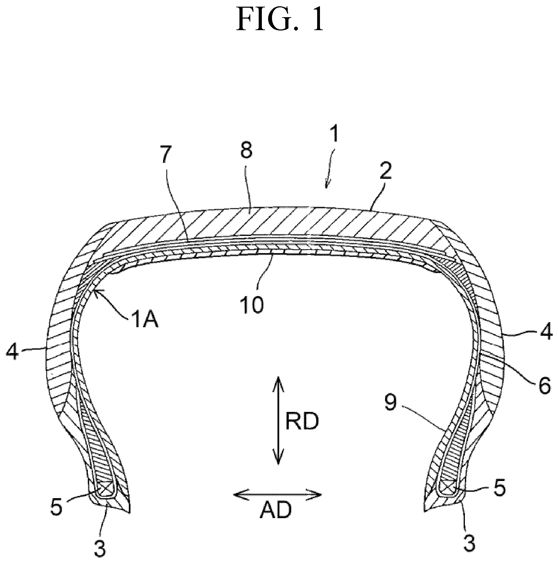

FIG. 1 is a cross-sectional view of a pneumatic tire according to one embodiment.

### DESCRIPTION OF EMBODIMENTS

A sealant composition according to this embodiment includes, as described above, a solid rubber component containing natural rubber as a main component, a hydrocarbon resin containing a terpene-based resin, and a liquid plasticizer. As a result, a sealant layer that is excellent in shape retention and sealing properties can be formed. The mechanism is presumed to be as follows, but is not limited thereto. Natural rubber is believed to have a crosslinked structure involving proteins and phospholipids at the molecular ends. When such natural rubber accounts for a large portion of the matrix rubber, presumably, a flow suppression effect is produced. In addition, in the hydrocarbon resin to be added as a plasticizing and adhesive component, a terpene-based resin that is highly compatible with natural rubber is used. As a result, presumably, combined with the high proportion of natural rubber in the solid rubber component, unevenness in the sealant composition is suppressed, and the formation and growth of cracks over time are suppressed. Incidentally, "sealing properties" refers to the performance of automatically closing through holes to prevent air from leaking from the tire, and, in this embodiment, refers to the performance of suppressing the air leakage over time as above.

In this embodiment, 100 parts by mass of the solid rubber component contains 60 parts by mass or more, that is, 60 to 100 parts by mass, of natural rubber (NR). It is preferable that 100 parts by mass of the solid rubber component contains 70 to 100 parts by mass, more preferably 80 to 100 parts by mass, of natural rubber. As used herein, "solid" refers to not having fluidity at 23°C.

Together with natural rubber, the solid rubber component may contain other diene rubbers, and may also contain non-diene rubbers. Here, a diene rubber refers to a rubber with a repeating unit corresponding to a diene monomer having a conjugated double bond. As other diene rubbers, for example, synthetic polyisoprene (isoprene rubber; IR), polybutadiene (butadiene rubber; BR), isoprene copolymers, butadiene copolymers, and the like can be mentioned.

In one embodiment, it is preferable that the solid rubber component is (a) natural rubber alone, or (b) a blend of at least one member selected from the group consisting of polybutadiene, synthetic polyisoprene, butadiene copolymer, and isoprene copolymer with natural rubber. That is, it is preferable that 100 parts by mass of the solid rubber component contains 60 to 100 parts by mass of natural rubber and 0 to 40 parts by mass of at least one member selected from the group consisting of IR, BR, butadiene copolymer, and isoprene copolymer. It is also possible that 100 parts by mass of the solid rubber component contains 70 to 90 parts by mass of natural rubber and 10 to 30 parts by mass of at least one member selected from the group consisting of IR, BR, butadiene copolymer, and isoprene copolymer.

Here, a butadiene copolymer is a copolymer of butadiene and other monomers, and, for example, styrene-butadiene rubber (SBR), butadiene-isoprene copolymer rubber, styrene-butadiene-isoprene copolymer rubber, and the like can be mentioned. An isoprene copolymer is a copolymer rubber of isoprene and other monomers, and, for example, styreneisoprene copolymer rubber, butadiene-isoprene copolymer rubber, styrene-butadiene-isoprene copolymer rubber, and the like can be mentioned. Incidentally, a copolymer rubber containing both butadiene and isoprene as monomers is encompassed by copolymers of the monomer whose molar proportion is higher. That is, when the molar proportion of butadiene is higher than that of isoprene, such a copolymer is encompassed by butadiene copolymers, while when the molar proportion of isoprene is higher than that of butadiene, such a copolymer is encompassed by isoprene copolymers.

As non-diene rubbers, for example, butyl rubber, halogenated butyl rubber, ethylene propylene rubber, and the like can be mentioned.

A hydrocarbon resin is a polymer based essentially on carbon and hydrogen. As a hydrocarbon resin, a solid thermoplastic resin having no fluidity at 23°C is preferably used. In this embodiment, a hydrocarbon resin is incorporated in an amount of 95 to 150 parts by mass per 100 parts by mass of the solid rubber component. Then, in the hydrocarbon resin incorporated in an amount of 95 to 150 parts by mass, a terpene-based resin accounts for 30 parts by mass or more.

The content of hydrocarbon resin is, per 100 parts by mass of the solid rubber component, preferably 95 to 130 parts by mass, and more preferably 95 to 115 parts by mass. As a result of the content of hydrocarbon resin being 95 parts by mass or more, it becomes easier to reduce the viscosity during application and improve the application speed. In addition, the sealant layer is prevented from becoming too hard at normal temperature, and the sealing properties can be improved. As a result of the content of hydrocarbon resin being 150 parts by mass or less, cracking is less likely to occur in the sealant layer, and the sealing properties can be improved.

As described above, the content of terpene-based resin is, per 100 parts by mass of the solid rubber component, 30 parts by mass or more, more preferably 50 parts by mass or more, still more preferably 80 parts by mass or more, and yet more preferably 95 parts by mass or more.

A terpene-based resin (terpene-based hydrocarbon resin) is a resin obtained by polymerizing a terpene compound and has a unit derived from a terpene compound. As terpene compounds, for example, α-pinene, β-pinene, limonene, dipentene, and the like can be mentioned. Examples of terpene-based resins include polyterpene resins obtained by polymerizing a terpene compound alone, as well as modified terpene resins obtained by polymerizing a terpene compound and monomers other than terpene. One of them may be used alone, and it is also possible to use two or more kinds together. As modified terpene resins, for example, aromatic modified terpene resins obtained by polymerizing a terpene compound and an aromatic compound (e.g., terpene-phenol resin) can be mentioned.

As the terpene-based resin, it is preferable to use a polyterpene resin, and it is more preferable to use a pinene resin whose main monomers are α-pinene and/or β-pinene. It is preferable that 100 mass% of the terpene-based resin contains 50 mass% or more, more preferably 80 mass% or more, of a polyterpene resin, and it is also possible to use a polyterpene resin alone.

The hydrocarbon resin may be a terpene-based resin alone, and it is also possible to use a terpene-based resin together with other hydrocarbon resins. Other hydrocarbon resins may be aliphatic, alicyclic, or aromatic. In addition, a combination thereof, such as an aliphatic/aromatic hydrocarbon resin, may also be used. As other hydrocarbon resins, for example, petroleum resins and styrene-based resins can be mentioned.

A petroleum resin is a resin obtained by polymerizing a petroleum fraction, and, for example, C5-based aliphatic petroleum resins, C9-based aromatic petroleum resins, and C5/C9-based aliphatic/aromatic copolymerized petroleum resins can be mentioned. One of them may be used alone, and it is also possible to use two or more kinds together. An aliphatic petroleum resin is a resin obtained by polymerizing a petroleum fraction equivalent to 4 to 5 carbon atoms (C5 fraction), and may be hydrogenated. An aromatic petroleum resin is a resin obtained by polymerizing a petroleum fraction equivalent to 8 to 10 carbon atoms (C9 fraction), and may be hydrogenated. An aliphatic/aromatic copolymerized petroleum resin is a resin obtained by copolymerizing a C5 fraction and a C9 fraction, and may be hydrogenated.

A styrene-based resin (styrene-based hydrocarbon resin) is a resin obtained by polymerizing a styrene-based monomer, such as styrene or its derivative (e.g., α-methylstyrene, vinyltoluene, 4-tert-butylstyrene, etc.), and may also be a copolymer of a styrene-based monomer and other aromatic or aliphatic monomers. As styrene-based resins, for example, styrene/α-methylstyrene copolymers, α-methylstyrene homopolymers, styrene/aliphatic monomer copolymers, α-methylstyrene/aliphatic monomer copolymers, styrene/α-methylstyrene/aliphatic monomer copolymers, and the like can be mentioned. One of them may be used alone, and it is also possible to use two or more kinds together.

The softening point of the hydrocarbon resin is not particularly limited, but is preferably 80 to 150°C, and more preferably 80 to 130°C. As used herein, the softening point is a value measured in accordance with ASTM D6090, and, in the Examples, values measured using "DP70" (automatic softening point measuring apparatus) manufactured by METTLER TOLEDO were employed.

A liquid plasticizer refers to a plasticizer that is liquid at 23°C. That is, "liquid" means having fluidity at 23°C. As the liquid plasticizer, it is preferable to use an oil or a liquid rubber, and it is also possible to use an oil and a liquid rubber together.

As the oil, any of various oils that are generally incorporated into rubber compositions can be used, and, for example, mineral oils, vegetable oils, polyolefin oils, and the like can be mentioned. A specific example of a preferred oil is a mineral oil containing a hydrocarbon as a main component, and, for example, process oils such as paraffin oils, naphthene oils, and aroma oils can be mentioned. Among them, it is preferable to use an aroma oil as the liquid plasticizer. Therefore, in one embodiment, it is preferable that 100 mass% of the liquid plasticizer contains 50 mass% or more, more preferably 80 mass% or more, of an aroma oil, and it is also possible to use an aroma oil alone.

As the aroma oil, one having an aromatic hydrocarbon mass percentage of 15 mass% or more as determined in accordance with ASTM D2140 is preferable. That is, a process oil may contain, in its molecular structure, an aromatic hydrocarbon, a paraffinic hydrocarbon, and a naphthenic hydrocarbon. An aroma oil containing such an aromatic hydrocarbon at a content ratio of 15 mass% or more, more preferably 17 mass% or more, is preferably used. The content ratio of aromatic hydrocarbon is preferably 70 mass% or less, and more preferably 65 mass% or less.

A liquid rubber is a rubber that is liquid at 23°C. As liquid rubbers, for example, liquid isoprene rubber, liquid butadiene rubber, liquid styrene butadiene rubber, liquid isoprene butadiene rubber, liquid isoprene styrene rubber, liquid isoprene butadiene styrene rubber, liquid isobutylene, liquid ethylene propylene diene rubber (EPDM), and the like can be mentioned. These liquid rubbers may be modified by carboxylation, methacrylation, or the like. One of these liquid rubbers may be used alone, and it is also possible to use two or more kinds together.

The weight average molecular weight (Mw) of the liquid rubber is not particularly limited, but is generally less than 100,000, and may also be 1,000 to 80,000, or 2,000 to 60,000. Incidentally, the diene rubber (including natural rubber) in the solid rubber component generally has a weight average molecular weight (Mw) of 200,000 or more, and is distinguished from the liquid rubber.

As used herein, the weight average molecular weight (Mw) is a value measured by gel permeation chromatography (GPC). Specifically, Mw is calculated in terms of polystyrene using a commercially available standard polystyrene using, for example, a differential refractive index detector (RI)-equipped "HLC8320-GPC" manufactured by Tosoh Corporation as the measuring apparatus, tetrahydrofuran (THF) as the solvent, and "TSKgel SuperHZM-M" manufactured by Tosoh Corporation as the column at a measurement temperature of 40°C, a flow rate of 0.35 mL/min, a concentration of 1.0 g/L, and an injection volume of 40 µL.

The content of liquid plasticizer is, per 100 parts by mass of the solid rubber component, 20 to 100 parts by mass, preferably 30 to 80 parts by mass, more preferably 35 to 80 parts by mass, and still more preferably 45 to 70 parts by mass. As a result of the content of liquid plasticizer being 20 parts by mass or more, it becomes easier to reduce the viscosity during application and improve the application speed, and the sealing properties in the sealant layer can also be improved. As a result of the content of liquid plasticizer being 100 parts by mass or less, it becomes easier to ensure the shape retention of the sealant layer.

In addition to the above components, the sealant composition according to this embodiment may suitably incorporate various additives such as fillers, zinc oxide, stearic acid, processing aids, softeners, waxes, anti-aging agents, crosslinking agents, and vulcanization accelerators within the usual ranges. In one embodiment, it is preferable that the sealant composition is free of crosslinking agents and vulcanization accelerators. Here, sulfur can be mentioned as a crosslinking agent. As vulcanization accelerators, sulfenamide-based, guanidine-based, thiuram-based, thiazole-based, and like various vulcanization accelerators can be mentioned.

As the fillers, carbon black and/or silica can be mentioned. Carbon black is not particularly limited, and known various species can be used. Silica is not particularly limited either, and, for example, wet silica such as wet-precipitated silica or wet-gelled silica can be mentioned. The content of filler is not particularly limited and may be, for example, 0 to 30 parts by mass, or 0 to 20 parts by mass, per 100 parts by mass of the solid rubber component. In one embodiment, the sealant composition may be free of fillers, or, alternatively, may contain carbon black in a small amount just for coloring, for example, in an amount of 0.5 to 8 parts by mass per 100 parts by mass of the solid rubber component.

The sealant composition according to this embodiment can be produced by kneading in the usual manner using a kneading machine commonly used in the rubber industry. For example, in the first step, ingredients excluding a hydrocarbon resin are added to a solid rubber component and kneaded. Next, in the second step, a hydrocarbon resin is added and kneaded. As a result, a sealant composition is obtained.

In the first step, for example, a kneading machine such as a Banbury mixer, a roll mill, or a kneading extruder is used. In the first step, a liquid plasticizer is fed into the kneading machine together with a solid rubber component, optionally followed by the addition of ingredients excluding a hydrocarbon resin, and kneading is performed while increasing the temperature of the kneaded product. The discharge temperature of the kneaded product from the kneading machine in the first step is not particularly limited and may be, for example, 120 to 160°C.

In the second step, for example, a kneading extruder such as a twin-screw kneading extruder or a co-kneader is used. In the second step, a hydrocarbon resin is fed into the kneading extruder together with the kneaded product obtained in the first step, and kneaded. The discharge temperature of the kneaded product from the kneading machine in the second step is not particularly limited, but is preferably a temperature higher than the softening point of the hydrocarbon resin. As a result, the dispersibility of the hydrocarbon resin can be improved. The discharge temperature in the second step is preferably 80 to 160°C, and more preferably 100 to 160°C.

The sealant composition according to this embodiment can be used to form a sealant layer on the inner surface of a pneumatic tire. As pneumatic tires, pneumatic tires of various sizes for various uses, such as tires for passenger cars and heavy-duty tires for trucks, buses, and the like, can be mentioned.

One embodiment of a pneumatic tire having a sealant layer will be described using FIG. 1. The pneumatic tire 1 has an annular tread 2 that comes in contact with the road surface, a pair of left and right bead portions 3,3 located on the inner side in a tire radial direction RD of the tread 2, and a pair of left and right sidewalls 4,4 located between the tread 2 and the bead portions 3,3. The tire 1 includes a bead core 5 embedded in each bead portion 3, a carcass ply 6 toroidally extending between the left and right bead portions 3,3, a belt 7 and a tread rubber 8 provided on the outer circumferential side of the carcass ply 6 in the tread 2, an inner liner 9 provided on the tire inner surface side of the carcass ply 6, and a sealant layer 10 provided on the tire inner surface side of the inner liner 9.

The sealant layer 10 is provided on an inner surface 1A of the pneumatic tire 1, specifically over the inner side of the inner liner 9. In this example, the sealant layer 10 is provided on the tire inner surface 1A in the tread 2 from one end to the other end in a tire axial direction AD. The sealant layer 10 is preferably provided across the entire inner surface of the tread 2 like this, and may be provided only on the inner surface of the tread 2, but may also be provided in a wider area including the inner surface of the tread 2. That is, it is preferable that the sealant layer 10 is provided on the inner surface 1A of the tire 1, including the inner surface of the tread 2.

The method for forming a sealant layer is not particularly limited, but it is favorable that the sealant composition is heated to a temperature higher than the softening point of the hydrocarbon resin (e.g., 80 to 160°C) and applied to the inner surface of a pneumatic tire using an applicator. Specifically, for example, the sealant composition may be ejected in strip form from the nozzle of the applicator, and applied along the tire circumferential direction while displacing the strip with respect to the tire inner surface in the tire axial direction. The sealant composition after application is left at normal temperature, and, as a result, due to a decrease in its fluidity, the sealant composition settles on the inner surface of the pneumatic tire, forming a sealant layer.

The thickness of the sealant layer is not particularly limited and may be, for example, 3 to 7 mm.

### EXAMPLES

Examples will be shown hereinafter, but the invention is not limited to these examples.

Components used in the examples and comparative examples are as follows.
- NR: RSS #3
- IR: "IR2200" manufactured by JSR Corporation
- BR: "UBEPOL BR150B" manufactured by UBE Corporation
- Aroma oil: "PROCESS NC140" manufactured by ENEOS Corporation
- Petroleum resin 1: Aliphatic/aromatic petroleum resin, "Petrotack 90" manufactured by Tosoh Corporation, softening point = 95°C
- Petroleum resin 2: Aliphatic/aromatic petroleum resin, "PR-373" manufactured by Exxon Mobil Corporation, softening point = 96°C
- Polyterpene resin 1: Pinene resin, "SYLVATRAXX 4125" manufactured by KRATON Corporation, softening point = 125°C
- Polyterpene resin 2: Pinene resin, "SYLVATRAXX 4150" manufactured by KRATON Corporation, softening point = 115°C
- Polyterpene resin 3: Pinene resin, "SYLVATRAXX 8125" manufactured by KRATON Corporation, softening point = 124°C
- Styrene-based resin 1: α-Methylstyrene-based resin, "SYLVATRAXX 4401" manufactured by KRATON Corporation, softening point = 85°C
- Styrene-based resin 2: α-Methylstyrene-based resin, "SYLVATRAXX 4412" manufactured by KRATON Corporation, softening point = 138°C

### Examples 1 to 10, Comparative Examples 1 to 9

Sealant compositions of Examples 1 to 10 and Comparative Examples 1 to 9 were prepared according to the formulations (parts by mass) shown in Tables 1 and 2 below. Specifically, first, in the first step, components excluding a hydrocarbon resin were kneaded using a Banbury mixer (discharge temperature: 145°C). Next, in the second step, a hydrocarbon resin was added to the kneaded product obtained in the first step and kneaded using a twin-screw kneading extruder (discharge temperature: 140°C), thereby giving a sealant composition.

Each obtained sealant composition was evaluated for the shape retention and sealing properties of the sealant layer. The evaluation methods are as follows.
(1) Shape Retention: Using a material application system manufactured by Nordson, a sealant composition was heated to 150°C and then, while being ejected from the nozzle at a pressure of 4.0 × 10⁵ Pa, applied to the inner surface of a pneumatic tire (tire size: 215/55R17) to form a sealant layer having a thickness of 4 mm. The pneumatic tire with the sealant layer formed was stacked flat at normal temperature and, after stationary storage for two weeks, the tire inner surface was observed to see whether the sealant layer had undergone flow deformation. When no flow deformation was observed, "A" (good shape retention) was given, while when flow deformation was observed, "B" (poor shape retention) was given.
(2) Sealing Properties: Using a pneumatic tire provided with a sealant layer prepared in the same manner as in the above evaluation of shape retention, the tire was mounted on a rim and filled with air at an internal pressure of 180 kPa. A nail (diameter: 5.2 mm, length: 50 mm) was allowed to penetrate the tread. After the tire was left stationary as it was for one week, the sealing properties were evaluated based on whether there was leakage of air. When the internal pressure drop was less than 5%, "A" (good sealing properties) was given, while when the internal pressure drop was 5% or more, "B" (poor sealing properties) was given.

**[Table 1]**

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Formulation (parts by mass) | | | | | | | | | | |
| NR | 80 | 80 | 80 | 80 | 80 | 80 | 60 | 60 | 100 | 60 |
| IR | | | | | | | 40 | | | |
| BR | 20 | 20 | 20 | 20 | 20 | 20 | | 40 | | 40 |
| Aroma oil | 50 | 50 | 50 | 50 | 50 | 50 | 50 | 50 | 70 | 30 |
| Petroleum resin 1 | | | | 50 | | | | | 50 | |
| Petroleum resin 2 | | | | | | | | | | |
| Polyterpene resin 1 | 100 | | | 50 | | 100 | 100 | 100 | 50 | |
| Polyterpene resin 2 | | 100 | | | 50 | 50 | | | | 120 |
| Polyterpene resin 3 | | | 100 | | | | | | | |
| Styrene-based resin 1 | | | | | 50 | | | | | |
| Styrene-based resin 2 | | | | | | | | | | |
| Evaluation | | | | | | | | | | |
| Shape retention | A | A | A | A | A | A | A | A | A | A |
| Sealing properties | A | A | A | A | A | A | A | A | A | A |

**[Table 2]**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|
| Formulation (parts by mass) | | | | | | | | | |
| NR | 40 | | 60 | 60 | 60 | 80 | 80 | 80 | 80 |
| IR | | 50 | | | | | | | |
| BR | 60 | 50 | 40 | 40 | 40 | 20 | 20 | 20 | 20 |
| Aroma oil | 50 | 50 | 50 | 50 | 50 | 40 | 50 | | 150 |
| Petroleum resin 1 | | | 100 | | | | | | |
| Petroleum resin 2 | | | | | 50 | | | | |
| Polyterpene resin 1 | | | | | | 60 | 200 | 100 | 100 |
| Polyterpene resin 2 | 100 | 100 | | | | | | | |
| Polyterpene resin 3 | | | | | | | | | |
| Styrene-based resin 1 | | | | 100 | | | | | |
| Styrene-based resin 2 | | | | | 50 | | | | |
| Evaluation | | | | | | | | | |
| Shape retention | B | B | A | A | A | A | A | A | B |
| Sealing properties | A | A | B | B | B | B | B | B | A |

The results are as shown in Tables 1 and 2. In Comparative Example 1, the amount of NR was less than specified, and in Comparative Example 2, IR was used instead of NR. Therefore, the sealant layer underwent flow deformation during stationary storage, and the shape retention was inferior.

In Comparative Examples 3 to 5, because the solid rubber component contains a specified amount or more of NR, the shape retention was excellent. However, because no terpene-based resin was used as the hydrocarbon resin, the sealing properties were inferior.

In Comparative Example 6, because the amount of the hydrocarbon resin was less than specified, the sealant layer was hard at normal temperature, and the sealing properties were inferior. In Comparative Example 7, because the amount of the hydrocarbon resin was more than specified, cracking occurred in the sealant layer, and the sealing properties were inferior.

In Comparative Example 8, because no liquid plasticizer was contained, the sealant layer was hard at normal temperature, and the sealing properties were inferior. In Comparative Example 9, because the amount of liquid plasticizer was more than specified, the shape retention of the sealant layer was inferior.

In contrast, in Examples 1 to 10, the solid rubber component contains a specified amount or more of NR, and also a terpene-based resin is incorporated as the hydrocarbon resin. As a result, the shape retention was excellent. In addition, the formation and growth of cracks over time in the nailing test were suppressed, and the sealing properties were excellent.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

### Reference Signs List

1: Pneumatic tire
2: Tread
3: Bead portion
4: Sidewall
5: Bead core
6: Carcass ply
7: Belt
8: Tread rubber
9: Inner liner
10: Sealant layer

## Claims

1. A sealant composition comprising, per 100 parts by mass of a solid rubber component containing 60 parts by mass or more of natural rubber:
95 to 150 parts by mass of a hydrocarbon resin containing 30 parts by mass or more of a terpene-based resin; and
20 to 100 parts by mass of a liquid plasticizer.

2. The sealant composition according to claim 1, wherein the solid rubber component is:
natural rubber alone; or
a blend of at least one member selected from the group consisting of polybutadiene, synthetic polyisoprene, butadiene copolymer, and isoprene copolymer with natural rubber.

3. The sealant composition according to claim 1 or 2, wherein 100 parts by mass of the solid rubber component contains 60 to 100 parts by mass of natural rubber and 0 to 40 parts by mass of at least one member selected from the group consisting of polybutadiene, synthetic polyisoprene, butadiene copolymer, and isoprene copolymer.

4. The sealant composition according to any one of claims 1 to 3, wherein the terpene-based resin contains a polyterpene resin.

5. The sealant composition according to any one of claims 1 to 4, wherein the hydrocarbon resin contains, together with the terpene-based resin, a petroleum resin and/or a styrene-based resin.

6. The sealant composition according to any one of claims 1 to 5, wherein the hydrocarbon resin has a softening point of 80 to 150°C.

7. The sealant composition according to any one of claims 1 to 6, wherein the liquid plasticizer contains an aroma oil.

8. A pneumatic tire comprising a sealant layer formed from the sealant composition according to any one of claims 1 to 7.

## Patentansprüche

1. Dichtungsmasse, die pro 100 Massenteile einer festen Kautschukkomponente, die 60 Massenteile oder mehr Naturkautschuk enthält, aufweist:
95 bis 150 Massenteile eines Kohlenwasserstoffharzes, das 30 Masseteile oder mehr eines Harzes auf Terpenbasis enthält; und
20 bis 100 Massenteile eines flüssigen Weichmachers.

2. Dichtungsmasse nach Anspruch 1, wobei die feste Kautschukkomponente:
nur Naturkautschuk ist; oder
eine Mischung aus mindestens einem Mitglied, das aus der Gruppe worden ausgewählt ist, die Polybutadien, synthetisches Polyisopren, Butadien-Copolymer und Isopren-Copolymer umfasst, mit Naturkautschuk ist.

3. Dichtungsmasse nach Anspruch 1 oder 2, wobei 100 Massenteile der festen Kautschukkomponente 60 bis 100 Massenteile Naturkautschuk und 0 bis 40 Massenteile mindestens eines Mitglieds enthält, das aus der Gruppe ausgewählt worden ist, die Polybutadien, synthetisches Polyisopren, Butadien-Copolymer und Isopren-Copolymer umfasst.

4. Dichtungsmasse nach einem der Ansprüche 1 bis 3, wobei das Harz auf Terpenbasis ein Polyterpenharz enthält.

5. Dichtungsmasse nach einem der Ansprüche 1 bis 4, wobei das Kohlenwasserstoffharz zusammen mit dem Harz auf Terpenbasis ein Erdölharz und/oder ein Harz auf Styrolbasis enthält.

6. Dichtungsmasse nach einem der Ansprüche 1 bis 5, wobei das Kohlenwasserstoffharz einen Erweichungspunkt von 80 bis 150 °C aufweist.

7. Dichtungsmasse nach einem der Ansprüche 1 bis 6, wobei der flüssige Weichmacher ein Aromaöl enthält.

8. Pneumatischer Reifen mit einer Dichtungsschicht, die aus der Dichtungsmasse nach einem der Ansprüche 1 bis 7 gebildet worden ist.

## Revendications

1. Composition d'agent d'étanchéité comprenant, pour 100 parties en masse d'un composant de caoutchouc solide contenant 60 parties en masse ou plus de caoutchouc naturel :
95 à 150 parties en masse d'une résine hydrocarbonée contenant 30 parties en masse ou plus d'une résine à base de terpène ; et
20 à 100 parties en masse d'un plastifiant liquide.

2. Composition d'agent d'étanchéité selon la revendication 1, dans laquelle le composant de caoutchouc solide est :
uniquement du caoutchouc naturel ; ou
un mélange d'au moins un élément choisi parmi le groupe constitué de polybutadiène, de polyisoprène synthétique, de copolymère de butadiène et de copolymère d'isoprène avec du caoutchouc naturel.

3. Composition d'agent d'étanchéité selon la revendication 1 ou 2, dans laquelle 100 parties en masse du composant de caoutchouc solide contiennent 60 à 100 parties en masse de caoutchouc naturel et 0 à 40 parties en masse d'au moins un élément choisi parmi le groupe constitué de polybutadiène, de polyisoprène synthétique, de copolymère de butadiène et de copolymère d'isoprène.

4. Composition d'agent d'étanchéité selon l'une quelconque des revendications 1 à 3, dans laquelle la résine à base de terpène contient une résine de polyterpène.

5. Composition d'agent d'étanchéité selon l'une quelconque des revendications 1 à 4, dans laquelle la résine hydrocarbonée contient, conjointement avec la résine à base de terpène, une résine de pétrole et/ou une résine à base de styrène.

6. Composition d'agent d'étanchéité selon l'une quelconque des revendications 1 à 5, dans laquelle la résine hydrocarbonée a un point de ramollissement de 80 à 150 °C.

7. Composition d'agent d'étanchéité selon l'une quelconque des revendications 1 à 6, dans laquelle le plastifiant liquide contient une huile aromatique.

8. Bandage pneumatique comprenant une couche d'agent d'étanchéité formée à partir de la composition d'agent d'étanchéité selon l'une quelconque des revendications 1 à 7.
